# EUROPEAN PATENT APPLICATION

(11) **EP 3 566 583 A1**
(43) Date of publication of application: **13.11.2019**
(21) Application number: 17808964.5
(22) Date of filing: 02.10.2017
(51) Int. Cl.: A21D 13/80, A23L 33/00, A23L 33/21, A23L 5/40

(54) **CHILDREN'S BISCUIT WITH NO ADDED SUGAR AND METHOD OF PREPARING IT**

(30) Priority: 23.03.2017 ES 201700254
(71) Applicant: Cuetara, S.L, 28590 Villarejo de Salvanes (Madrid) (ES)
(72) Inventor: VARGAS OLMO, Juan Gabriel, 08320 El Masnou (Barcelona) (ES)
(74) Representative: Durán-Corretjer, S.L.P.
(86) International application number: PCT/ES2017/070644
(87) International publication number: WO 2018/172573

(57) **Abstract**

The present invention relates to a biscuit with no added sugar for consumption by children which comprises flour (50-70 wt.%), water (5-15 wt.%), oil (3-18 wt.%), fructooligosaccharides (0.1-10 wt.%), inulin (1-20 wt.%), fibre (0.1-5 wt.%) and optionally colourings (0.1-2 wt.%). Said biscuit comprises neither sucrose nor polyols. A method of preparing the biscuit is also described.

## Description

Obesity has become one of the major global health challenges of the 21st century. The increased incidence of obesity in children and adolescents is particularly alarming, given the correlation with metabolic disease and the cardiovascular complications thereof. In many countries, dietary habits and lifestyle are changing rapidly, and there is an increasing prevalence of childhood obesity. The marked increase in the consumption of sugary foods observed in children is considered to be a contributing factor to the obesity pandemic.

Consequently, for many years, the food industry has devoted a great deal of effort to improving the nutrition of foodstuffs. Reducing the calories of servings and the excessive amounts of fats and sugars are becoming key measures in improving nutrition and creating new foodstuffs.

Ingesting one gram of sucrose provides 4 calories, as is the case with all other carbohydrates, compared with 9 calories from one gram of fat, 4 calories from proteins and 2 from one gram of fibre. Sugars, as with all other nutrients, contribute to the energy density of the diet; however, given that contemporary culture encourages excessive consumption thereof, they can be responsible for a significant increase in total calorie intake. When the increase in calorie intake is not offset by greater energy expenditure, the circumstances causing excess weight, obesity and associated diseases arise. Substituting sucrose (4 kcal) for fibre (2 kcal) is one way to reduce the calorie density of foodstuffs, and to encourage the consumption of a nutrient, i.e. fibre, that is consumed in quantities lower than those recommended and that is associated with multiple health benefits.

In order to overcome these disadvantages, it is known to substitute sucrose for polyols in some food products. Said polyols can be hydrogenated monosaccharides such as sorbitol, mannitol, xylitol, erythritol, or hydrogenated disaccharides such as maltitol, lactitol and hydrogenated isomaltulose. In their purest form, these polyols have no reducing power and are not fermented by oral flora in acids. As a result, using said polyols, it is possible to produce non-cariogenic food products, provided that the other ingredients of the formulation do not contain fermentable sugars. Furthermore, polyols are metabolised slowly and do not lead to a sharp increase in blood sugar levels post-consumption.

However, excessive consumption of polyols or consumption thereof among persons who are particularly sensitive to their effects is known to cause laxative effects, including flatulence and even diarrhoea. The lesser the body weight of a person, the greater the potential laxative effect per gram of polyol ingested, and therefore consumption thereof is not recommended among children.

It is therefore necessary to obtain a foodstuff, and in particular a sweet biscuit, that is suitable for consumption by children and that does not contain any added sugars, polyols or intense sweeteners.

In order to solve the above-mentioned problems, the present invention discloses a composition for a decorated biscuit that is suitable for consumption by children and that does contain any added sugars or polyols, in which composition said sweetening components have been substituted for a mixture of fructooligosaccharide syrup and inulin. Furthermore, the colourings used for decorating the biscuit are natural, low-calorie colourings, such as a mixture of anthocyanin and paprika extract or vegetable carbon.

In general, the biscuit composition according to the present invention comprises flour (50-70 wt.%), water (5-15 wt.%), oil (3-18 wt.%), fructooligosaccharides (0-10 wt.%), inulin (1-20 wt.%) and fibre (0.1-5 wt.%). Said composition can also comprise emulsifiers (0-1 wt.%), common salt (0-1 wt.%), mineral salts (0-1 wt.%), vitamins (0-1 wt.%), flavourings (0-3 wt.%) and raising agents (0-2 wt.%).

The flour can be any cereal and/or legume flour known to a person skilled in the art for making biscuits. Preferably, said flour is wheat flour, rice flour, corn flour, oats, rye and/or any mixture thereof.

Similarly, the oil used is any seed or plant oil known to a person skilled in the art. Preferably, the oil used in the present invention is palm oil, sunflower oil, soybean oil, rapeseed oil, olive oil and/or any mixture thereof.

The fructooligosaccharides according to the present invention are in the form of a syrup containing mainly oligofructose produced by partial enzymatic hydrolysis of inulin. The oligofructose consists of units of fructose bonded together by β(2-1) bonds. The total number of fructose units (degree of polymerisation or DP) varies between 2 and 8. For its part, inulin is a powdered food ingredient derived from chicory root and is slightly enzymatically hydrolysed in order to improve its solubility. Inulin is considered to be a soluble, prebiotic and fermentable fibre, and consists of oligo and polysaccharides composed of units of fructose bonded together by β(2-1) bonds.

Preferably, the fibre in the biscuit composition according to the present invention is acacia fibre. Acacia fibre is powdered and comes from the acacia tree; it is a highly branched polysaccharide and is considered to be a source of soluble fibre.

Mineral salts are a mixture of salts that are used for the purpose of food fortification. Preferably, said mineral salts are calcium carbonate and iron sulphate, among others. For its part, the vitamin complex is a non-exclusive mixture of vitamins used for the purpose of food fortification.

In the biscuit composition according to the present invention, the term "raising agents" refers to a mixture of ingredients that are used for giving the biscuit its texture. Preferably, said raising agents are sodium bicarbonate, potassium bicarbonate, sodium metabisulphite, ammonium bicarbonate or a mixture thereof. For its part, the term "flavouring" refers to a mixture of either natural or artificial flavourings, or a mixture of both, that are commonly used in the food industry and that also include sweetness-modulating flavourings.

The biscuit according to the present invention can be decorated using colourings at a concentration of between 0-2%.

The colourings of the biscuit composition according to the present invention can be: (1) a mixture of paprika extract and anthocyanin and (2) vegetable carbon. Said colourings can be diluted in propylene glycol and/or vegetable oil. Paprika extract is a liquid natural colouring that is dark red, soluble in water and is produced by extraction of pigments of the red pepper fruit (*Capsicum annuum L*.). Said extract is emulsified and stabilised. The main colouring agents in the paprika extract are capsanthin and capsorubin (for example, colouring E-160c). Anthocyanin is a dark red, liquid natural colouring produced by extraction and subsequent pasteurisation of black carrots (for example, colouring E-163). Finally, vegetable carbon is a natural colouring in the form of fine black powder that is insoluble in water and fats and acts by dispersion (for example, E-153).

The biscuit comprising the composition according to the present invention can be prepared by means of any method known in the prior art, such as laminating, cutting, embossing and wire-cutting, among others. Preferably, the biscuit according to the present invention is prepared by means of a method that comprises the steps of:
a) weighing and mixing;
b) laminating and cutting;
c) baking;
d) spraying; and
e) cooling and packaging.

After weighing the ingredients, pre-mixing is carried out before mixing, using all the liquid and powdered minority products (except the raising agents) together with the oil and water. Pre-mixing is carried out for between 1-5 minutes at low speed in a mixer. Next, the flour and the inulin are added, together with the gas-producing agents and raising agents. Mixing is carried out for between 30 and 50 minutes at low speed.

Subsequently, in the lamination and cutting process, the dough obtained in step a) is poured onto a cutter, which cuts the dough such that afterwards, by means of a conveyor, said dough is conveyed to a laminating hopper. The dough passes through laminating rollers, forming a uniform sheet, which is subsequently cut to form the biscuit. Alternatively, the lamination and cutting process can be substituted for a process in which the biscuit is formed by introducing the dough into a rotary mould.

Optionally, the method according to the present invention comprises a printing step.

In the printing step, the biscuit is decorated. The sheet, on leaving the mould, passes through a printer. The printer can comprise 3 rollers. The colouring falls onto a tray where the first roller is wetted, said first roller impregnating the second roller by means of contact therewith, and said second roller impregnating the printing roller, which is the one which ultimately paints the biscuit.

In the baking step, the product enters the oven by means of a conveyor belt and is baked in accordance with a defined cooking chart until it reaches a moisture content of less than 6%, the normal value being below 2%. The baking process can be carried out in conventional continuous or batch ovens.

The baked biscuits can pass through a sprayer for oil that can contain flavouring. The metering of said flavouring is done automatically or manually. If done manually, the flavouring is added in the oil-collecting basin according to the specified quantity and frequency. Subsequently, on leaving the oven, the product is cooled by exposure to ambient temperature until it reaches a temperature of less than 70ºC, preferably between 30 and 65ºC. After cooling, the product is packaged.

Finally, the present invention relates to the use of a colouring which comprises (1) a mixture of paprika extract and anthocyanin or (2) vegetable carbon for decorating a food product, preferably for a biscuit having low calorie content for consumption by children.

The present invention is described below on the basis of non-limiting examples.

### EXAMPLES

### Example 1. Preparation of a decorated biscuit for consumption by children according to the present invention

The following ingredients were weighed:

| | Quantity (g) | wt.% |
|---|---|---|
| Wheat flour | 75 | 60.88 |
| Water | 13.5 | 10.96 |
| High oleic sunflower oil | 15.8 | 12.83 |
| Fructooligosaccharides | 1.7 | 1.38 |
| Inulin | 13.9 | 11.28 |
| Acacia fibre | 0.75 | 0.61 |
| Lecithin emulsifier | 0.42 | 0.34 |
| Common salt | 0.55 | 0.45 |
| Calcium carbonate | 0.24 | 0.19 |
| Vitamin complex | 0.05 | 0.04 |
| Flavourings | 0.3 | 0.24 |
| Sodium bicarbonate | 0.63 | 0.51 |
| Ammonium bicarbonate | 0.21 | 0.17 |
| Sodium metabisulphite | 0.04 | 0.03 |
| Colouring: Anthocyanin 68%; propylene glycol 23% and paprika extract 9% | 0.15 | 0.12 |
| Total | 123.19 | 100 |

All the ingredients were pre-mixed (apart from the ammonium bicarbonate, sodium bicarbonate and calcium carbonate) for 2 minutes at low speed in a mixer. Next, the remaining ingredients were added and mixed for 40 minutes. Next, the dough obtained was poured onto a cutter, which cut the dough, which was conveyed to the laminating hopper by means of a conveyor. The dough passed through laminating rollers, forming a uniform sheet that was subsequently cut into the shape of a biscuit. The sheet, on leaving the mould, passed through a printer that comprised 3 rollers for painting the biscuit. The biscuit was baked until it reached a moisture content of less than 6%. Subsequently, the biscuit was sprayed automatically with oil, and was cooled to 60ºC.

### Example 2. Preparation of a decorated biscuit for consumption by children according to the present invention

The following ingredients were weighed:

| | Quantity (g) | wt.% |
|---|---|---|
| Wheat flour | 540 | 66.20 |
| Water | 80 | 9.81 |
| High oleic sunflower oil | 60 | 7.36 |
| Fructooligosaccharides | 12 | 1.47 |
| Inulin | 100 | 12.26 |
| Acacia fibre | 5.44 | 0.46 |
| Lecithin emulsifier | 3 | 0.37 |
| Common salt | 4 | 0.49 |
| Calcium carbonate | 1.7 | 0.21 |
| Vitamin complex | 0.36 | 0.04 |
| Flavourings | 1.95 | 0.24 |
| Sodium bicarbonate | 1.5 | 0.18 |
| Ammonium bicarbonate | 4.55 | 0.55 |
| Sodium metabisulphite | 0.30 | 0.04 |
| Colouring: Vegetable carbon 17% + propylene glycol 83% | 0.98 | 0.12 |
| Total | 815.69 | 100 |

The biscuit was prepared using the same method as in Example 1.

### Example 3. Estimation of the nutritional value of a biscuit according to the present invention

| Biscuit according to the present invention | | Per 100 g | Per biscuit (5.9 g) |
|---|---|---|---|
| Kcal | | 435 | 26 |
| KJ | | 1821 | 107 |
| Protein | | 6.9 | 0.4 |
| Carbohydrates | | 58.4 | 3.4 |
| | Sugars | 2.2 | 0.1 |
| Fats | | 15.8 | 0.9 |
| | Saturated | 1.6 | 0.1 |
| | Monounsaturated | 12.5 | 0.7 |
| | Polyunsaturated | 1.6 | 0.1 |
| Salt | | 0.8 | 0.05 |
| | Sodium | 0.31 | 0.02 |
| Fibre | | 16.11 | |
| Vitamin A (µg) | | 144 | |
| Vitamin D (µg) | | 0.85 | |
| Thiamine (mg) | | 0.5 | |
| Riboflavin (mg) | | 0.8 | |
| Niacin (mg) | | 9 | |
| Vitamin B6 (mg) | | 0.9 | |
| Calcium (mg) | | 120 | |
| Iron (mg) | | 5 | |

## Claims

1. Biscuit with no added sugar for consumption by children, **characterised in that** it comprises flour (50-70 wt.%), water (5-15 wt.%), oil (3-18 wt.%), fructooligosaccharides (0.1-10 wt.%), inulin (1-20 wt.%) and fibre (0.1-5 wt.%).

2. Biscuit with no added sugar for consumption by children according to claim 1, **characterised in that** it further comprises emulsifiers (0-1 wt.%), common salt (0-1 wt.%), mineral salts (0-1 wt.%), vitamins (0-1 wt.%), flavourings (0-3 wt.%), raising agents (0-2 wt.%) and colourings (0-2 wt.%).

3. Biscuit with no added sugar for consumption by children according to either claim 1 or claim 2, **characterised in that** the flour is wheat flour, rice flour, corn flour, oats, rye and/or any mixture thereof.

4. Biscuit with no added sugar for consumption by children according to any one of the preceding claims, **characterised in that** the oil is palm oil, sunflower oil, soybean oil, rapeseed oil, olive oil and/or any mixture thereof.

5. Biscuit with no added sugar for consumption by children according to any one of the preceding claims, **characterised in that** the degree of polymerisation (DP) of the fructooligosaccharides is between 2 and 8.

6. Biscuit with no added sugar for consumption by children according to any one of the preceding claims, **characterised in that** the raising agents are sodium bicarbonate, potassium bicarbonate, sodium metabisulphite, ammonium bicarbonate or a mixture thereof.

7. Biscuit with no added sugar for consumption by children according to any one of the preceding claims, **characterised in that** the colourings are (1) a mixture of paprika extract and anthocyanin or (2) vegetable carbon, said biscuit being decorated with said colourings.

8. Biscuit with no added sugar for consumption by children according to claim 7, **characterised in that** said colourings are diluted in propylene glycol and/or vegetable oil.

9. Method for preparing a biscuit with no added sugar for consumption by children according to claims 1 to 8, **characterised in that** said method comprises the following steps:
a) weighing and mixing for between 30 and 50 minutes at low speed;
b) laminating and cutting;
c) baking until the relative moisture content falls below 6%;
d) spraying; and
e) cooling to a temperature of less than 70ºC and packaging.

10. Method according to claim 8, **characterised in that** it optionally comprises a printing step.

11. Method according to claim 10, **characterised in that** the colourings used in the printing process are (1) a mixture of paprika extract and anthocyanin or (2) vegetable carbon.

12. Method according to claim 11, **characterised in that** said colourings are diluted in propylene glycol and/or vegetable oil.

13. Use of a colouring which comprises (1) a mixture of paprika extract and anthocyanin or (2) vegetable carbon for decorating a food product.

14. Use according to claim 13, **characterised in that** said food product is a biscuit having low calorie content for consumption by children.

## Amended claims

### Amended claims under Art. 19.1 PCT

1. Biscuit with no added sugar for consumption by children, **characterised in that** it comprises flour (50-70 wt.%), water (5-15 wt.%), oil (3-18 wt.%), fructooligosaccharides (0.1-10 wt.%), inulin (1-20 wt.%) and fibre (0.1-5 wt.%) and that does not contain polyols or intense sweeteners.

2. Biscuit with no added sugar for consumption by children according to claim 1, **characterised in that** it further comprises emulsifiers (0-1 wt.%), common salt (0-1 wt.%), mineral salts (0-1 wt.%), vitamins (0-1 wt.%), flavourings (0-3 wt.%), raising agents (0-2 wt.%) and colourings (0-2 wt.%).

3. Biscuit with no added sugar for consumption by children according to either claim 1 or claim 2, **characterised in that** the flour is wheat flour, rice flour, corn flour, oats, rye and/or any mixture thereof.

4. Biscuit with no added sugar for consumption by children according to any one of the preceding claims, **characterised in that** the oil is palm oil, sunflower oil, soybean oil, rapeseed oil, olive oil and/or any mixture thereof.

5. Biscuit with no added sugar for consumption by children according to any one of the preceding claims, **characterised in that** the degree of polymerisation (DP) of the fructooligosaccharides is between 2 and 8.

6. Biscuit with no added sugar for consumption by children according to any one of the preceding claims, **characterised in that** the raising agents are sodium bicarbonate, potassium bicarbonate, sodium metabisulphite, ammonium bicarbonate or a mixture thereof.

7. Biscuit with no added sugar for consumption by children according to any one of the preceding claims, **characterised in that** the colourings are (1) a mixture of paprika extract and anthocyanin or (2) vegetable carbon, said biscuit being decorated with said colourings.

8. Biscuit with no added sugar for consumption by children according to claim 7, **characterised in that** said colourings are diluted in propylene glycol and/or vegetable oil.

9. Method for preparing a biscuit with no added sugar for consumption by children according to claims 1 to 8, **characterised in that** said method comprises the following steps:
a) weighing and mixing for between 30 and 50 minutes at low speed;
b) laminating and cutting;
c) baking until the relative moisture content falls below 6%;
d) spraying; and
e) cooling to a temperature of less than 70ºC and packaging.

10. Method according to claim 8, **characterised in that** it optionally comprises a printing step.

11. Method according to claim 10, **characterised in that** the colourings used in the printing process are (1) a mixture of paprika extract and anthocyanin or (2) vegetable carbon.

12. Method according to claim 11, **characterised in that** said colourings are diluted in propylene glycol and/or vegetable oil.

13. Use of a colouring which comprises (1) a mixture of paprika extract and anthocyanin or (2) vegetable carbon for decorating a food product.

14. Use according to claim 13, **characterised in that** said food product is a biscuit having low calorie content for consumption by children.
